# EUROPEAN PATENT SPECIFICATION

(11) **EP 0 717 367 B1**
(45) Date of publication and mention of the grant of the patent: **29.08.2001**
(21) Application number: 95309089.1
(22) Date of filing: 13.12.1995
(51) Int. Cl.: G06K 11/18

(54) **Digitizer stylus apparatus and method**
Digitalisierstift und Verfahren
Crayon à digitaliser et méthode

(30) Priority: 16.12.1994 US 357810
(43) Date of publication of application: 19.06.1996
(60) Divisional application: 01200370.3
(73) Proprietor: HYUNDAI ELECTRONICS AMERICA, Milpitas, California 95035 (US)
(72) Inventor: Skoog, Steven K., Colorado Springs, CO 80917 (US)
(74) Representative: Gill, David Alan

(56) References cited:
- WO-A-94/18663
- US-A- 5 349 139

## Description

The present invention relates to digitizer stylus apparatus and method.

In particular, the present invention is related to the subject matter of EP-A-0 717 368.
WO-A-94 18663 discloses a stylus apparatus for providing an electrical data signal and which also comprises memory means for storing data which can be used to interpret indicia scribed by the stylus. Also, US-A-5 349 139 discloses a stylus arrangement in which means is provided for loading data into the said stylus.

According to one aspect of the present invention there is provided stylus apparatus for providing an electrical data signal representing indicia scribed by the said stylus apparatus, characterised by memory means arranged for storing reference data comprising a digitised representation of a reference indicia and arranged to transfer the said stored reference data to verification means arranged for comparing said stored reference data with the indicia scribed by the stylus for verification of the scribed indicia.

According to another aspect of the present invention there is provided a method of verifying indicia scribed by a user of a communication device, characterized by the steps of transmitting reference data, which describes the indicia, to the communication device from a stylus held by the user; deriving sample data from indicia scribed by the user, and comparing the reference data with the sample data.

The invention is advantageous in providing improved signature recognition apparatus.

Also, the invention can provide a stylus, for use with a digitizing tablet, which contains data which describes its owner's signature.

The invention can also provide for a stylus for use with a digitizing tablet. The stylus is therefore advantageously arranged to store information which identifies characteristics of a user's handwriting and these characteristics are transmitted to a computer when the user interfaces with the computer, and can then be used by the computer to recognize the user's handwriting.

In one form of the invention, a stylus can contain memory which stores data which describes the signature of the owner of the stylus. The description of the signature, contained in the stylus can then be compared with a signature actually written by the user. If they match, the identity of the user is confirmed.

The invention therefore concerns a stylus for use with a digitizing tablet. The stylus can store information regarding the characteristics of a user's handwriting, in digital format.

When the user seeks to interface with a computer, the stylus can download the characteristics to the computer and the computer can then use the characteristics to recognize, or interpret, the user's handwriting.

The invention is described further hereinafter, by way of example only, with reference to the accompanying drawings in which:
Fig. 1 illustrates a digitizing tablet 3 associated with a computer 4;
Fig. 2 is a simplified view of a digitizing tablet;
Fig. 3 illustrates a signal 9 produced by a stylus, and currents I1, I2,I3, and I4 induced by the signal;
Figs. 4 and 5 illustrate in more detail how the currents are produced;
Fig. 6 illustrates paths followed by the currents;
Fig. 7 illustrates a signature;
Fig. 8 illustrates digitizing a signature;
Fig. 9 illustrates a stylus 6 which contains a memory which holds data indicative of a reference signature;
Fig. 10 illustrates a public data terminal, such as an advanced public telephone, having an associated digitizer pad, and also a po9wer cable containing contacts which connect with contacts carried by a stylus 6;
Fig. 11 illustrates a stylus lacking batteries or other power source, which receives electrical power through particular contacts;
Fig. 12 is a flow chart illustrating one signature verification procedure; and
Fig. 13 is a flow chart illustrating the loading of reference signature data into a stylus.

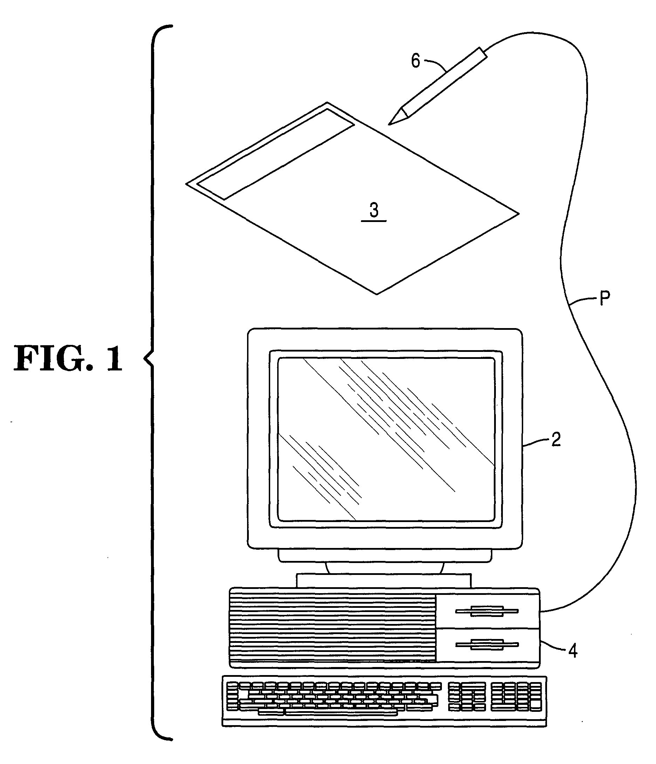

Fig. 1 illustrates a computer 4 and a digitizing tablet 3 which provides an input mechanism to the computer. The digitizing tablet need not be a separate element, as shown in Fig. 1, but can take the form of a transparent overlay of the display 2. Such an overlay configuration is frequently used in pen-based portable computers.

The tablet-and-stylus combination provide input to the computer and a simplified explanation of the operation such a tablet-and-stylus is given below.

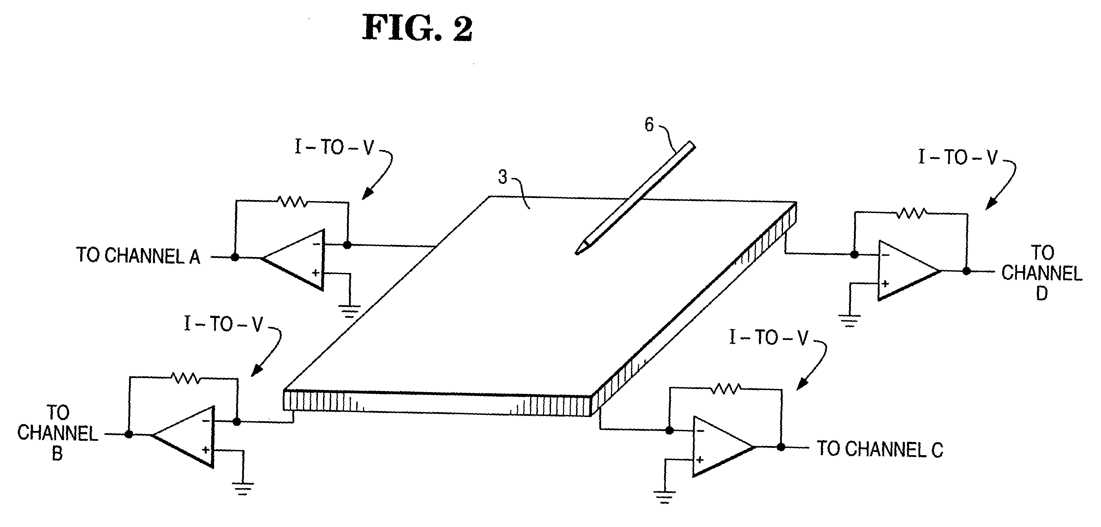

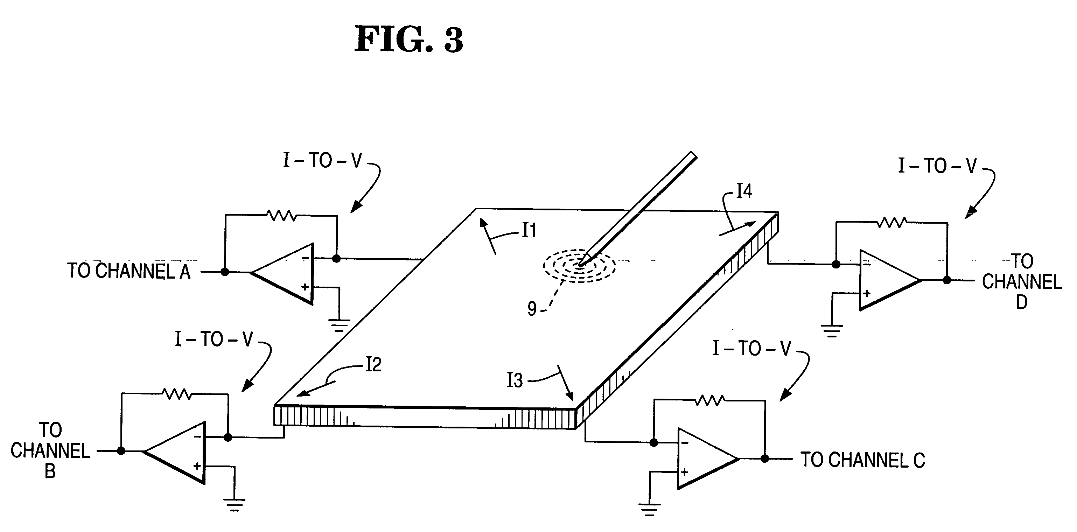

Fig. 2 shows a digitizing tablet 3 and its associated stylus 6. In the tablet, there are four current-to-voltage amplifiers (labeled I-to-V). One such amplifier is provided at each comer. The stylus 6, when activated, produces a signal 9 (see Fig. 3). This signal induces currents I1, I2, I3, and I4, which are detected by the I-to-V amplifiers.

The I-to-V amplifiers each produce a voltage (V) indicative of the size of its respective current (I). Processing circuitry, not shown, but known in the art, receives the voltage signals, and computes the position of the stylus 6.

The currents I1 - I4 are induced because the stylus 6 acts as one plate of a capacitor. The digitizing tablet provides the other plate of the capacitor. The tablet can include a resistive surface, or grid, of a material such as indium tin oxide, which acts as the other plate of the capacitor.

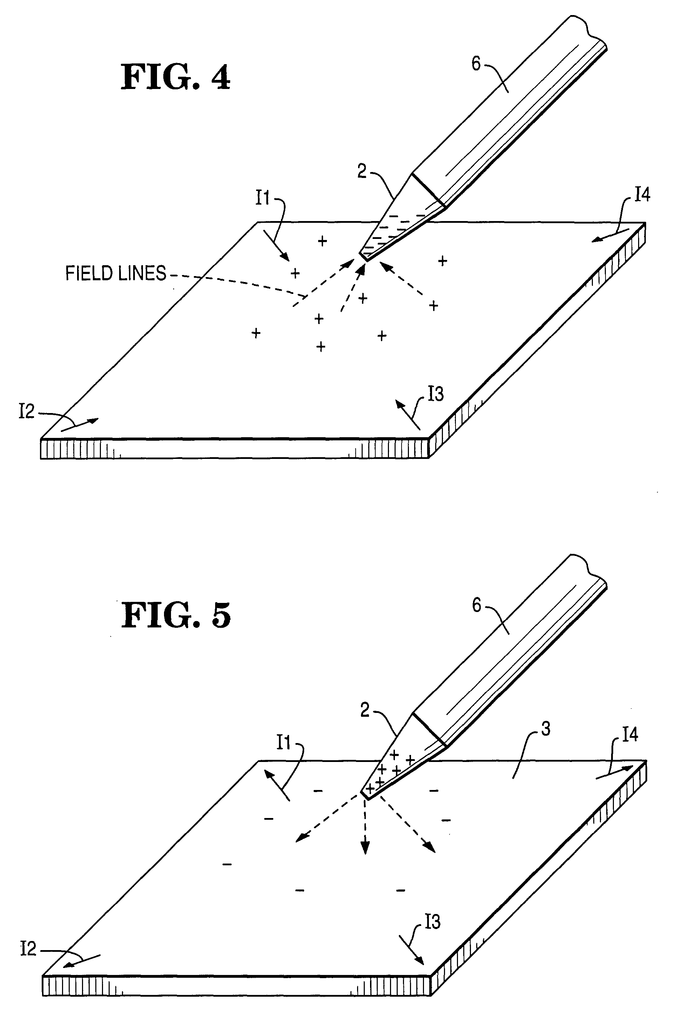

As Fig. 4 indicates, when a negative charge is applied to a tip 2 of the stylus 6, a positive charge is induced on the surface of the tablet 3. Currents I1-I4 supply this positive charge. Conversely, as in Figure 5, a positive charge on the tip 2 of the stylus 6 induces a negative charge on the tablet. The currents I1 - I4 supply this negative charge.

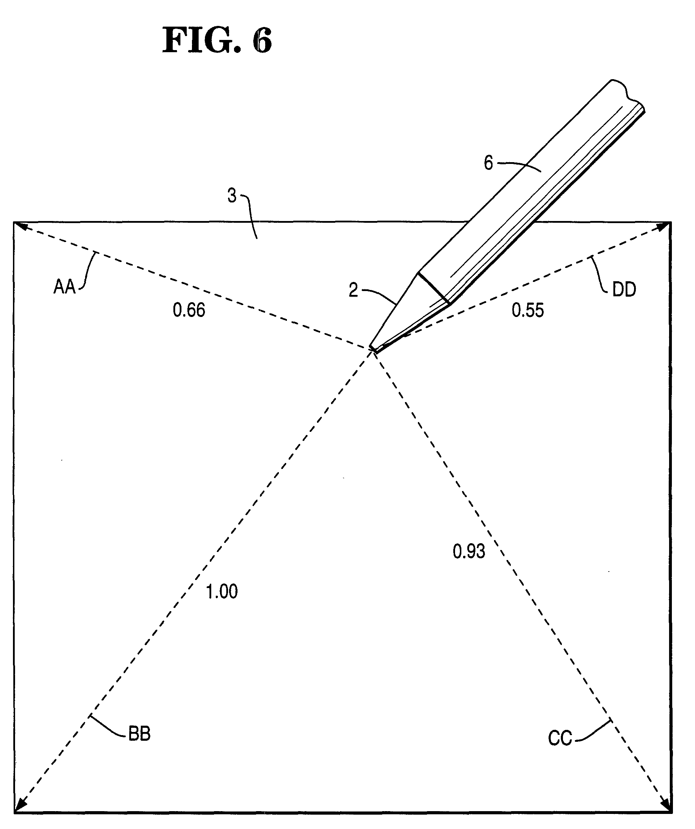

As Fig. 6 shows, each current can be viewed as following a direct path from the stylus to one comer of the tablet. The following reasoning allows stylus position to be inferred from the voltage signals:
1. The length of each path determines the resistance of the path.
2. The resistance determines the size of the current.
3. The size of the current determines the voltage produced by the amplifier.
4. Each voltage indicates its respective path length.
A highly simplified example, as outlined below, provides for further illustration.

Assume that the stylus in Fig. 6 represents a voltage source applied to the tablet. The paths have the relative lengths shown in Fig. 6, and also listed in the following Table.

**TABLE**

| PATH | RELATIVE LENGTH | RELATIVE RESISTANCE | RELATIVE CURRENT | RELATIVE I-to-V VOLTAGE |
|---|---|---|---|---|
| AA | 0.66 | 0.66 | 1.52 | 1.52 |
| BB | 1.00 | 1.00 | 1.00 | 1.00 |
| CC | 0.93 | 0.93 | 1.08 | 1.08 |
| DD | 0.55 | 0.55 | 1.82 | 1.82 |

The resistance of the path depends on the length, so that the relative resistances are in proportion to the relative path lengths, as indicated in the Table's columns RELATIVE LENGTH and RELATIVE RESISTANCE.

Current equals voltage divided by resistance, V/R, so that the relative currents will be inversely proportional to the relative path lengths, as indicated in the Table's column RELATIVE CURRENT.

The I-to-V amplifiers in Figure 2 each produce a voltage which is proportional to its respective current. Thus, the voltage outputs of the I-to-V amplifiers have the relative magnitudes indicated in the rightmost column of the Table.

The output voltage signals can be used to compute position of the stylus.

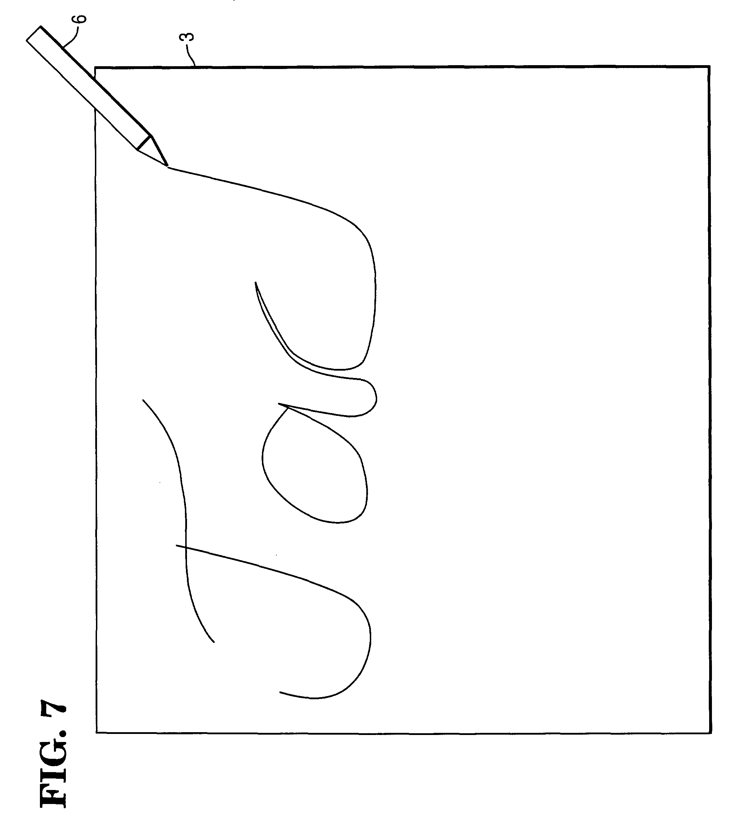

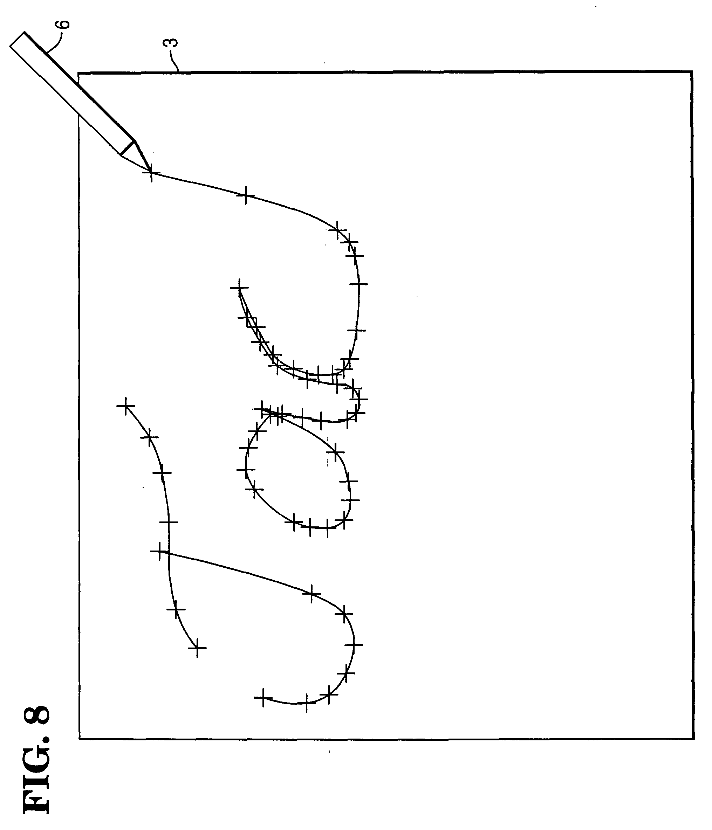

The system described above can be used to recognize a user's signature. Fig. 7 shows the stylus 6 writing a signature on the digitizer tablet 3. The position of the stylus 6 is detected periodically, such as every 1/100 second, or other suitable interval. Data points, indicated by the crosses in Fig. 8, are derived at these intervals.

For each data point, the x- and y-position are known, together with the real-time occurrence of the data point. Consequently, velocities, accelerations, and other parameters, in addition to the x- and y-positions, can be derived.

Each person's signature is represented by a unique collection of these parameters. Thus, these parameters, like fingerprints, can be used to identify a person.

Some styluses are not physically connected, or tethered, to the computer by the power cord P shown in Fig. 1 and can, instead, be battery-powered.

One form of the invention can conceptually be divided into two parts. First, a user writes a signature on a digitizing tablet, using a special stylus, and the tablet digitizes or otherwise parameterizes the signature. This signature may be called a sample signature.

Second, the special stylus contains a pre-recorded, digitized image of the user's signature, which may be called a reference signature. The stylus transmits the reference signature to the digitizing tablet, which compares the sample signature with the reference signature. If they match, the user is assumed to be the actual owner of the stylus.

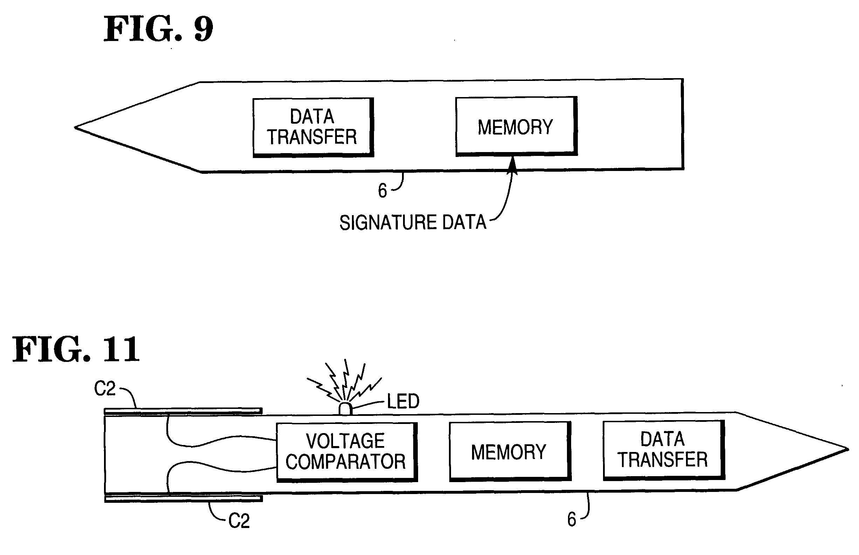

Appropriate reference signature data can be loaded into the memory of the stylus 6 in Fig. 9 in numerous different ways. A simplified explanation comprises the following procedure:
(1) the user writes the reference signature onto a digitizing tablet, which digitizes the data, in the usual manner. The digitizing process creates a table of reference data, which describes the reference signature;
(2) the table is burned into a PROM, EPROM, EEPROM, or other memory chip; and
(3) the chip is installed into the stylus, producing a device such as that shown in Fig. 9.

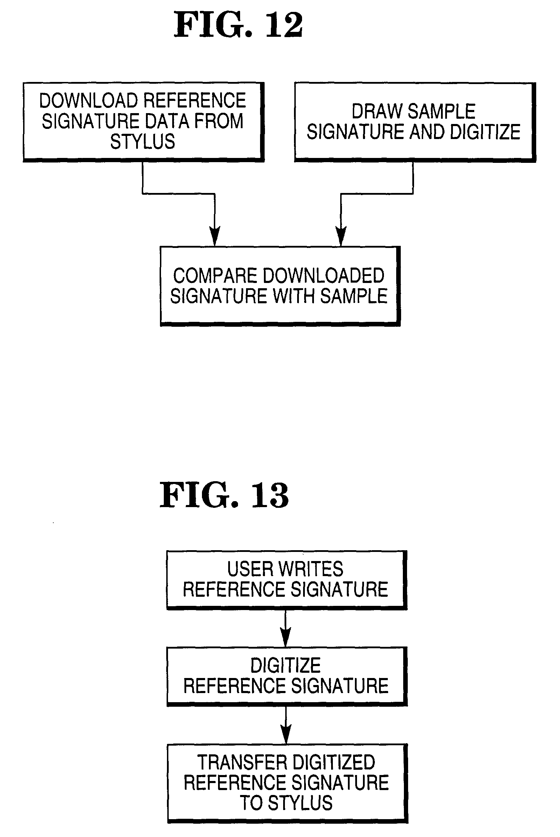

Another approach eliminates the need to install a memory chip into the stylus, and is illustrated by the flow chart of Fig. 13. A user writes a signature onto a digitizing tablet (as in Fig. 7) and reference signature data is derived from the written signature, in a known manner.

This reference data is then loaded into a memory within the stylus (illustrated in Fig. 9), using wireless telemetry outlined further below.

There are several formats for digitizing signature data. Perhaps the simplest is a bit map ofthe signature. According to this feature, the collection of points in Fig. 7 comprises a bitmap of the signature.

Two other formats are illustrated in US patents 5,285,506, Crooks et al. and 5,054,088, Gunderson et al.

The particular format used in digitizing the signature is not necessarily significant.

It is preferred that the data transfer between the stylus and the digitizing tablet be accomplished by wireless telemetry.

Examples of data transfer between a stylus and a digitizing tablet can be found in US patents 4,672,154, Rodgers, et al., 5,247,138, Landmeier, 5,294,792, Lewis, et al., and 5,247,137, Epperson.

In addition, published European patent application EP-A-0 669 595 provides further information relating to such features.

The telemetry can be radio-frequency, optical, acoustic, or any other type and numerous approaches, known in the art, exist for the transfer of data between a computer and a remote component.

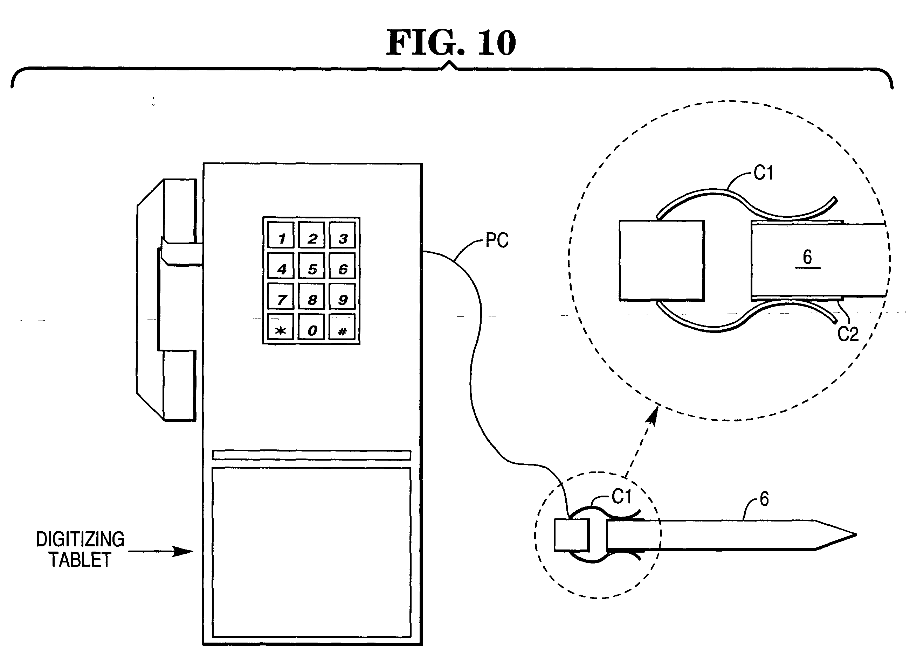

As an alternative to wireless telemetry, a removable, hard-wired connection can be made between the stylus and a digitizing device. For example, the stylus can contain metallic contacts which mate with a receiver, as shown in Fig. 10. The hard-wired approach can be useful in situations where it is desired to deliver electrical power to the stylus, as for charging a battery, or for allowing the stylus to consume larger amounts of power than are feasible to provide via battery.

It should be appreciated that the signature need not be the actual, legal signature of the user. The signature can be any graphical image which the user draws. It can be a word, or a picture, and can be described generically as an "image."

Also, the time of transfer of the reference data, relative to the time of writing the signature, is not necessarily significant. For example, the transfer of reference data can be done prior to the writing of the sample signature, or afterwards.

Also, the reference data can be transferred during writing of the signature. That is, a multiplexing between position data and signature transfer data can be undertaken.

Further, the transfer of the reference signature data can be accomplished by a second data channel, independent of the position signal 9 shown in Fig. 3. Such a channel is known from the above mentioned European patent application EP-A-0 669 595. As will be appreciated, such features relate particularly to pen-based computers, wherein a pen, or stylus is positioned on a disply of the computer, which display includes a digitizer tablet, and which produces a signal that allows the computer to detect the position of the stylus. The stylus is also arranged to produce a second signal, which is used as a telemetry carrier to transmit data from the stylus to the computer. The stylus is provided with position signal generating means such as a first oscillator, and a data signal generating means such as a second oscillator, so that a data signal can be delivered from the stylus at the same time as the position signal. A digitizer tablet is also provided with filter means for discriminating between the two aforementioned signals.

From one perspective, there are two computation tasks involved:
(1) producing sample data from the sample signature, and
(2) comparing the sample data with the reference data.

How these tasks are allocated between devices is not necessarily significant. For example, the digitizing tablet may contain a processor which produces the sample data described in task (1). However, a computer may perform the comparison described in task (2).

It should be observed that the reference data stored within the stylus is not mere intangible information. For example, data stored in a PROM can take the form of fuse representation, which is either blown or intact. A blown fuse indicates a ZERO, and an intact fuse indicates a ONE (or vice-versa). Similar observations apply to EPROMS and EEPROMS.

Thus, even though the reference signature data comprises indicia of the reference signature, the reference signature data is nevertheless a tangible entity.

Power consumption in styluses used with digitizing tablets is an important issue. Batteries used to power the styluses occupy space, and must be replaced or recharged periodically.

It may be desirable to construct a stylus which contains no batteries at all, and which draws all of its power from an external, stationary source. Figs. 10 and 11 provide such an example.

In Fig. 10, a user attaches the stylus 6 to a power cord PC, which provides power to the stylus 6. A voltage comparator in Fig. 11 can be employed to test whether correct voltage is being delivered, and lights an LED when the correct voltage is received.

With this arrangement, the stylus can produce a higher-power signal 9 in Fig. 3, without concern over battery depletion. In addition, the power cord PC can contain a channel for downloading of the reference signature data, in order to eliminate telemetry.

The present invention can also allow local identification of a user, without the requirement of added telecommunication. An example of identification, in which telecommunication is required, is outlined further below.

When a user enters a card into a bank's Automated Teller Machine (ATM), the ATM asks the user for a password. Meanwhile, the ATM links, by telephone generally, to a central computer, and finds out the user's password. The ATM then compares the password which the user entered with the password received from the central computer. This telecommunication takes time, adds cost, and is subject to failure under certain conditions, such as thunderstorms or other interference.

The invention is advantageous in eliminating the requirement of contacting a possible remote central computer. Fig. 12 describes a sequence of steps of identification of a user, without resort to telecommunication.

The following examples illustrate situations in which identification of a user can be made by signature. However, the list provided should not be considered exhaustive.
a) Admission of a user to restricted locations;
b) granting of access to a user to computer installations; and
c) granting access to ATMs.

The data stored in the stylus need not be limited to data which can be used to identify the user's signature. Rather, the data can be the type used to interpret the user's handwriting generally.

For example, the sample written by the user, as indicated in Fig. 7, may be required to contain a sufficient number of symbols to characterize the user's handwriting, for purposes of allowing a computer to later read the user's handwriting.

The system derives the necessary handwriting characteristics from the sample, according to the method of handwriting recognition used by the system. Such handwriting characterization is known in the art. The system then loads these characteristics into memory contained in the stylus, in a manner similar to loading the reference signature data.

Later, when the user interfaces with a computer, using the stylus, the stylus transmits the user's handwriting characteristics to the computer, in the manner described above. The computer uses these characteristics to interpret the user's handwriting.

A very simple example, which illustrates some of the underlying principles, is outlined below. The sample which the user writes may contain every letter of the alphabet, both upper and lower case, plus the ten numerals. The system digitizes each character, as described in connection with Fig. 7. The system can now contain a digitized sample representing each letter and number of the user's handwriting.

These digitized samples are stored within the stylus. When the user wishes to interface with a computer, the stylus downloads the digitized samples to the computer. When the user writes handwriting on the digitizing tablet, the computer compares each letter with the digitized samples, and selects the best match, thereby interpreting the handwriting.

Of course, advanced handwriting systems do not perform this comparison of digitized characters. Instead, they characterize the user's handwriting in other ways, but the basic idea is still the same: obtain unique characteristics of the user's handwriting (i.e., "learn" the user's handwriting), and then interpret the user's handwriting, based on these characteristics.

Of course, the data indicative of the user's handwriting characteristics can be loaded into the stylus in other ways, and the particular method of loading is not necessarily significant. Thus, one important aspect of the invention is the storage, no matter how achieved, within the stylus, of data which is used to recognize a user's handwriting.

The invention is not restricted to the details of the foregoing embodiments and numerous substitutions and modifications can be undertaken without departing from the scope of the invention.

## Claims

1. Stylus apparatus (6) for providing an electrical data signal representing indicia scribed by the said stylus apparatus (6), characterised by memory means arranged for storing reference data comprising a digitised representation of a reference indicia and arranged to transfer the said stored reference data to verification means arranged for comparing said stored reference data with the indicia scribed by the stylus (6) for verification of the scribed indicia.

2. Apparatus as claimed in Claim 1, wherein said memory means is arranged for storing characteristics of a user's handwriting, and including means for transferring said characteristics to a receiver.

3. Apparatus as claimed in Claim 2, wherein said means for transferring said characteristics comprises telemetry means for transmitting the stored data.

4. Apparatus as claimed in any one of Claims 1 to 3, and arranged to receive power from an external source.

5. Apparatus as claimed in any one of Claims 1 to 4 and including a data channel for reference data associated with the stylus apparatus (6).

6. A method of verifying indicia scribed by a user of a communication device, characterized by the steps of transmitting reference data, which describes the indicia, to the communication device from a stylus (6) held by the user; deriving sample data from indicia scribed by the user, and comparing the reference data with the sample data.

7. A method as claimed in Claim 6, wherein said indicia comprises a user's signature.

## Patentansprüche

1. Pen-Vorrichtung (6) zum Senden eines elektrischen Datensignals, das von der genannten Pen-Vorrichtung (6) geschriebene Zeichen repräsentiert, gekennzeichnet durch einen Speicher, der zum Speichern von Referenzdaten, die eine digitalisierte Repräsentation eines Referenzzeichens umfassen, und zum Übertragen der genannten gespeicherten Referenzdaten zu einem Verifikationsmittel vorgesehen ist, das die Aufgabe hat, die genannten gespeicherten Referenzdaten mit den von dem Pen (6) geschriebenen Zeichen zu vergleichen, um die geschriebenen Zeichen zu verifizieren.

2. Vorrichtung nach Anspruch 1, wobei der genannte Speicher dafür vorgesehen ist, Charakteristiken der Handschrift eines Benutzers zu speichern, und mit einem Mittel zum Übertragen der genannten Charakteristiken zu einem Empfänger.

3. Vorrichtung nach Anspruch 2, wobei das genannte Mittel zum Übertragen der genannten Charakteristiken ein Fernmessmittel zum Übermitteln der gespeicherten Daten umfasst.

4. Vorrichtung nach einem der Ansprüche 1 bis 3, die so ausgestaltet ist, dass sie Strom von einer externen Quelle empfängt.

5. Vorrichtung nach einem der Ansprüche 1 bis 4, umfassend einen Datenkanal für Referenzdaten, die mit der Pen-Vorrichtung (6) assoziiert sind.

6. Verfahren zum Verifizieren von Zeichen, die von einem Benutzer eines Kommunikationsgerätes geschrieben werden, gekennzeichnet durch die folgenden Schritte: Übermitteln von Referenzdaten, die die Zeichen beschreiben, zum Kommunikationsgerät von einem Pen (6), der von dem Benutzer gehalten wird; Ableiten von Probedaten von Zeichen, die von dem Benutzer geschrieben werden, und Vergleichen der Referenzdaten mit den Probedaten.

7. Verfahren nach Anspruch 6, wobei die genannten Zeichen die Unterschrift eines Benutzers umfassen.

## Revendications

1. Appareil de stylet (6) pour fournir un signal électrique de données représentant des signes tracés par ledit appareil de stylet (6), caractérisé par un moyen de mémoire arrangé pour stocker des données de référence comprenant une représentation digitalisée d'un signe de référence et arrangé pour transférer lesdites données de référence stockées à un moyen de vérification arrangé pour comparer lesdites données de référence stockées aux signes tracés par le stylet (6) afin de vérifier les signes tracés.

2. Appareil tel que revendiqué dans la revendication 1, dans lequel ledit moyen de mémoire est arrangé pour stocker des caractéristiques de l'écriture manuscrite d'un utilisateur, et incluant un moyen pour transférer lesdites caractéristiques à un récepteur.

3. Appareil tel que revendiqué dans la revendication 2, dans lequel ledit moyen pour transférer lesdites caractéristiques comprend un moyen de télémétrie pour transmettre les données stockées.

4. Appareil tel que revendiqué dans l'une quelconque des revendications 1 à 3, et arrangé pour recevoir du courant d'une source externe.

5. Appareil tel que revendiqué dans l'une quelconque des revendications 1 à 4 et incluant un canal de données pour des données de référence associées à l'appareil de stylet (6).

6. Méthode de vérification de signes tracés par un utilisateur d'un dispositif de communication, caractérisée par les étapes consistant à transmettre des données de référence, qui décrivent les signes, au dispositif de communication à partir d'un stylet (6) tenu par l'utilisateur, dériver des données échantillons desdits signes tracés par l'utilisateur, et comparer les données de référence aux données échantillons.

7. Méthode telle que revendiquée dans la revendication 6, dans laquelle lesdits signes comprennent la signature d'un utilisateur.
